# EUROPEAN PATENT SPECIFICATION

(11) **EP 3 607 610 B1**
(45) Date of publication and mention of the grant of the patent: **11.11.2026**
(21) Application number: 18726911.3
(22) Date of filing: 29.03.2018
(51) Int. Cl.: H01M 10/6557, H01M 10/6555, H01M 10/613, H01M 10/658, H01M 10/6567, H01M 10/625

(54) **ENERGY STORAGE MODULE COOLING SYSTEM**
ENERGIESPEICHERMODUL KÜHLSYSTEM
SYSTÈME DE REFROIDISSEMENT DU MODULE DE STOCKAGE D'ÉNERGIE

(30) Priority: 05.04.2017 GB 201705512
(43) Date of publication of application: 12.02.2020
(73) Proprietor: Siemens Energy Global GmbH & Co. KG, 81739 München (DE)
(72) Inventor: BERGE, Tore, 7020 Trondheim (NO); BØRSHEIM, Eirik, 0484 Oslo (NO); ELIASSEN, Sivert, 3030 Drammen (NO)
(86) International application number: PCT/EP2018/058142
(87) International publication number: WO 2018/184997

(56) References cited:
- DE-A1- 102009 028 920
- DE-A1- 102012 018 906
- DE-A1- 102013 113 797
- DE-A1- 102015 112 683
- US-A1- 2013 207 459
- US-A1- 2016 204 483

## Description

This invention relates to a cooling system for an energy storage module, in particular for a module for storing electrical energy, such as an electrochemical energy storage module, providing electrical energy to an end user.

Stored electrical energy modules, or power units of various types are becoming increasingly common in many applications, in particular for use where there are environmental concerns relating to emissions in sensitive environments, or public health concerns. Stored electrical energy power units are typically used to provide electrical energy to operate equipment, to avoid emissions at the point of use, although that stored energy may have been generated in many different ways. Stored electrical energy may also be used to provide peak shaving in systems otherwise supplied from the grid, or from various types of power generation system, including diesel generators, gas turbines, or renewable energy sources. Aircraft, vehicles, vessels, offshore rigs, or rigs and other powered equipment in remote locations are examples of users of large scale stored electrical energy. Vehicle drivers may use the stored energy power unit in city centres and charge from an internal combustion engine on trunk roads, to reduce the harmful emissions in the towns and cities, or they may charge up from an electricity supply. Ferries which carry out most of their voyage relatively close to inhabited areas, or in sensitive environments are being designed with hybrid, or fully electric drive systems. Ferries may operate with stored energy to power the vessel when close to shore, using diesel generators offshore to recharge the batteries. In some countries the availability of electricity from renewable energy sources to use to charge the stored energy unit means that a fully electric vessel may be used, provided that the stored energy units are sufficiently reliable for the distances being covered, with no diesel, or other non-renewable energy source used at all. Whether hybrid, or fully electric, the stored energy units may be charged from a shore supply when docked. The development of technology to achieve stored energy units that are reliable enough for prolonged use as the primary power source must address certain technical issues.

DE 10 2009 028920 A1 describes providing heat conducting metal plates between batteries to extract heat and between the heat conducting plates of adjacent batteries, providing a heat insulating pad to prevent conduction of heat between adjacent batteries.

US 2016/204483 A1 describes a liquid cooled battery system having primary and secondary coolant sources, the system having cooling fins that receive coolant from the primary source and a meltable section on the cooling fins to allow coolant from the secondary source to flow into the cooling fins if the temperature exceeds a threshold at which the meltable material melts.

DE 10 2015 112683 A1 describes a cooling plate design for cooling a battery cell that employs a plastic plate having cutouts for coolant flow paths. The plastic plate has a layer of adhesive film on each side to maintain coolant in the channels.

DE 10 2012 018906 A1 describes providing metallic cooling devices between batteries of groups of batteries and thermally insulating devices to prevent heat transfer between adjacent groups.

From US 2013/207459 A1 a battery module with battery module housing and battery cells is known.

DE 10 2013 113797 A1 discloses a floor element, a side part and a cooling module for a rechargeable battery, and to a method for producing a cooling module.

In accordance with a first aspect of the present invention, an energy storage module cooling system comprises a source of cooling fluid; and a fluid conduit for supplying the cooling fluid to one or more energy storage modules; wherein each energy storage module comprises carriers for a plurality of energy storage devices, the carriers being stacked together; the carriers further comprising cooling channels forming an integral cooler for each energy storage device; wherein the cooling channels are formed of one of polythene, polyamide, or thermoplastic; and wherein one surface of each energy storage device is in thermal contact with the cooler; and another surface of the energy storage device is provided with a thermally insulating layer whereby heat transfer between adjacent energy storage devices is reduced; wherein each energy storage device is fitted into the carrier, and wherein the cooler comprises a serpentine shaped channel coupled to the source of cooling fluid.

The cooler may comprise a plurality of channels in parallel coupled to the source of cooling fluid.

The thickness of walls of the cooler channel may be chosen to not exceed 5mm.

The cooling fluid may comprise one of water, or water glycol mixture.

The thermally insulating layer may comprise an inorganic silicate.

The thermally insulating layer may have a thickness in the range of 1mm to 5mm.

The cooling unit, cooling fluid conduit and coolers, may comprise a closed, re-circulating system.

The energy storage devices may comprise electrochemical cells.

In accordance with a second aspect of the present invention, a power supply system may comprise one or more energy storage modules, each module comprising a plurality of energy storage devices electrically connected in series; and a cooling system according to the first aspect.

In accordance with a third aspect of the present invention, a method of manufacturing a carrier or cooler of an energy storage module cooling system according to the first aspect comprises forming the cooling channels by 3-D printing, additive manufacturing, moulding, or extrusion.

An example of cooling system and method according to the present invention will now be described with reference to the accompany drawings in which:
Figure 1 illustrates a cooling system according to the present invention for a modular stored energy system;
Figures 2a and 2b illustrate more detail of a carrier for energy storage devices using the cooling system according of Fig.1;
Figures 3a and 3b show more detail of coolers which may be used in the examples of Figs. 1, 2a and 2b;
Figure 4 illustrates how multiple energy storage device carriers may be stacked together in the cooling system of the present invention; and,
Figure 5 shows more detail of part of the stack of Fig.4;

Electrical energy storage modules based on electrochemical cells, such as batteries are already in use, for example in hybrid, or electric vehicles. Early large scale batteries were lead acid, but more recently, lithium ion batteries have been developed for electrical energy storage for large scale applications. Li-ion batteries are typically pressurised and the electrolyte is flammable, so they require care in use and storage. A problem which may occur with Li-ion batteries is thermal runaway, which may be caused by an internal short circuit in a battery cell, created during manufacture. Other causes, such as mechanical damage, overcharge, or uncontrolled current may also cause thermal runaway, but the battery system design is typically adapted to avoid these. Manufacturing issues with the cells cannot be ruled out entirely, so precautions are required to minimise the effect should thermal runaway occur. In a large scale Li-ion battery system, the amount of energy that is released during a thermal runaway is a challenge to contain. A thermal event may increase temperatures in a single cell from a standard operating temperature in the range of 20°C to 26 °C to as much as 700°C to 1000°C. Safe operating temperatures are below 60 °C, so this is a significant problem. There are strict regulations in the marine and offshore industries regarding risk to the vessel or rig, one requirement being that there should be no transfer of excess temperature from one cell to another. If overheating occurs, then it should be contained in a single cell and not allowed to spread. In addition, for marine and offshore applications, weight and volume of any equipment is severely restricted, leading to compact, lightweight systems being preferred. It is a challenge to produce a compact, lightweight, system that achieves the required thermal isolation and cools the cell in which excess heating occurs, quickly and efficiently. Another problem is that in a thermal event there may also be release of a large amount of flammable gasses, which may self-ignite at elevated temperatures

The problem may be addressed by allowing whole modules to enter thermal runaway and simply control the resulting flames and fire with an external fire extinguishing system. In this case there are open flames in the battery space and controlling the resulting flames and fire does not ensure safe transportation and storage. A conventional approach is to use thick aluminium fins between each cell to provide the cooling, as the aluminium has good thermally conductivity and is able to conduct heat away effectively, but this adds weight and volume and still does not ensure safe transportation and storage because heat is conducted extremely well through aluminium (>300 W/mK) and will heat neighbouring cells quickly, if not cooled. During transport and storage, cooling may not be available. The problem of release of flammable gas may be handled by providing a pressure valve in the module casing, releasing the gas at a certain pressure, either into the battery space or into a separate exhaust system. However, conventional pressure release valves are designed to burst under pressure, which leads to other problems. In addition, active cooling may be provided in the exhaust outside the module to avoid self-ignition.

In a Li-ion battery system, it is very important that the temperature of the battery cells does not exceed the prescribed operating temperature and that the cell temperature in the entire system is uniform. Sustained operation outside the prescribed operating temperature window may severely affect the lifetime of the battery cells and increases the risk of thermal runaway occurring. The present invention addresses the problem of preventing thermal runaway from spreading to other cells, should it occur in one cell, as well as helping to increase the operating lifetime of a cell.

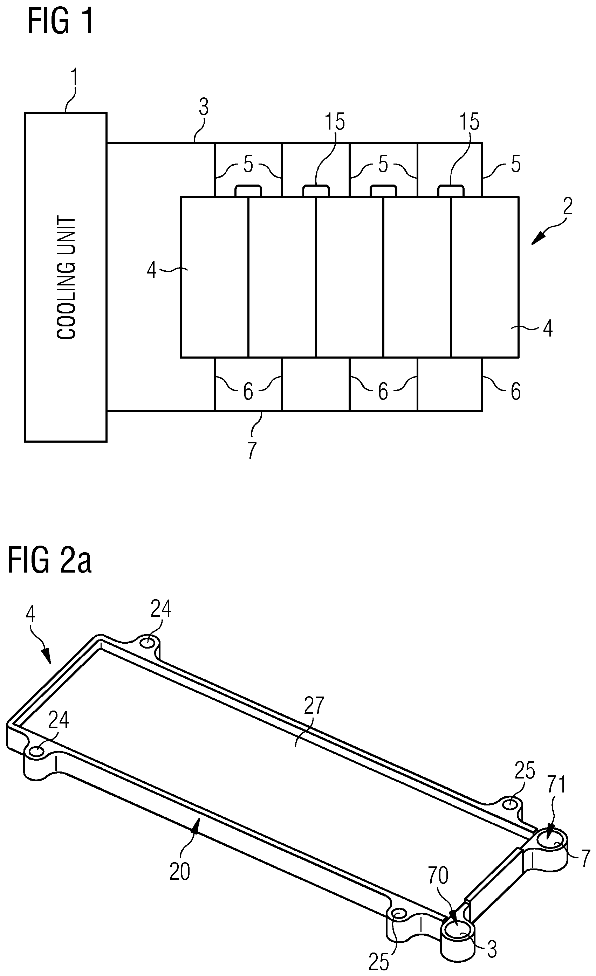

Fig.1 illustrates one example of a stored electrical energy module cooling system according to the invention. A cooling unit 1 provides a cooling fluid to modules of an energy storage unit 2 via pipes 3. In this example, the energy storage unit comprises a plurality of modules 4, each module supplied in parallel with cooling fluid through inlet tubes 5. Alternatively, cooling fluid may be supplied to each module in series. The warmed cooling fluid is removed through outlet tubes 6 and returned to the cooling unit 1 in pipes 7. Typically, the warmed fluid is cooled again in the cooling unit and re-circulated in a closed system.

An energy storage module 4 typically comprises a stack of one or more energy storage devices (not shown), for example electrochemical cells, or batteries, each mounted in a carrier, or directly on a cooler, the cooler being either integral with, or separate from the carrier, or mount and the energy storage devices being electrically connected together in series with a neighbouring energy storage device in the next carrier, or on the next cooler. A module typically comprises between 10 and 30 cells, although more or fewer cells per module are possible. The module may further comprise a substantially gas tight enclosure, a part of which comprises a non-magnetic material. The cells are preferably prismatic or pouch type cells to get a good packing density. A plurality of energy storage modules may be connected together in series by a DC bus 15 to form an energy storage unit 2, or cubicle. A single cell of a module may have a capacity between 20Ah and 100 Ah, more commonly between 60Ah and 80 Ah, although cells with a capacity as low as a couple of Ah, or over 100Ah, may be used. In one example, there may be up to thirty energy storage devices per module 4 and up to nine modules per cubicle. Typically, the unit comprises between 9 and 21 modules, although this depends upon the application and may be up to 30, or 40, or as many as 50 modules per cubicle in some cases. Multiple cubicles may be installed on a vessel, or platform, or in any other installation.

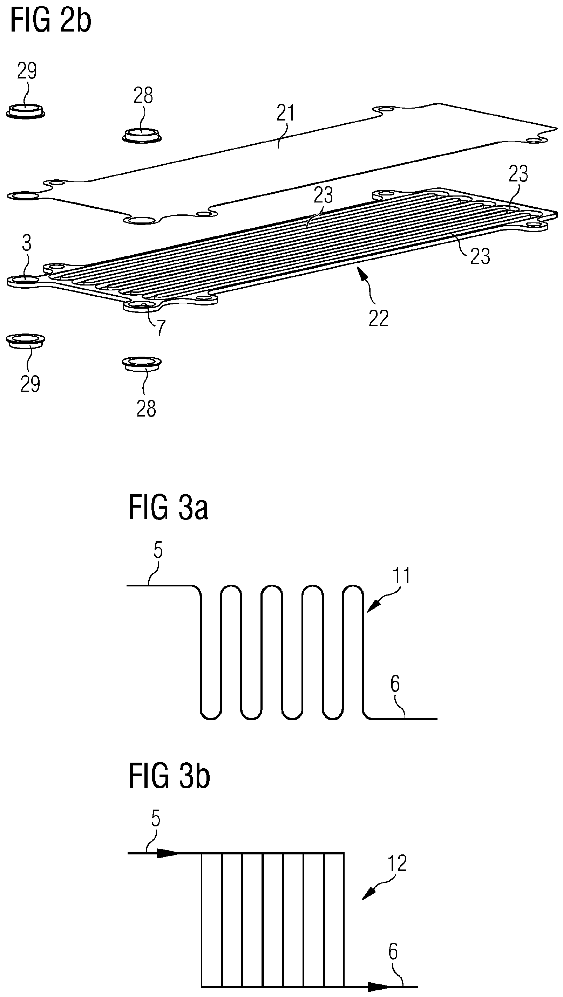

Figs.2a and 2b show more detail of the modules 4. Each module comprises a cooler on which an energy storage device (not shown) may be mounted. The cooler may be integral with, or separate from a carrier, or casing 20, as shown in Fig.2a, into which an energy storage device (not shown), such as a battery cell, is fitted. The carrier is typically made from a polymer plastics material for light weight and low cost. As shown in Fig.2b, the cooler may be formed by laminating, or welding, a plate 21 to a series of raised sections 23 formed, typically by moulding, in another piece of the same polymer plastics material. This forms closed channels, or conduits, through which cooling fluid may flow from one end to another. Alternatively, a cooler 22 may be formed integral with the carrier, for example by additive manufacturing techniques. A battery cell may be installed in each carrier 20, for example on outer surface 27 of the cooler. The outer surface of the cooler 22 may be in direct contact with one surface of the battery cell to provide effective cooling over a large surface area, without any direct contact of the cooling fluid to the energy storage device, or cell.

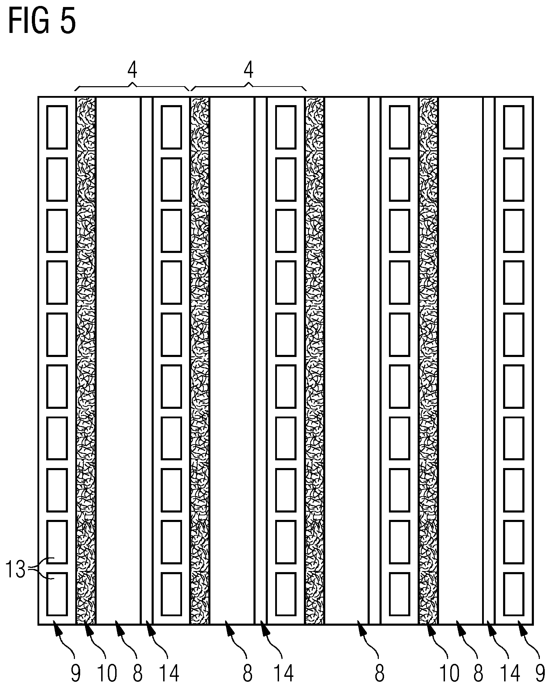

Another surface of the cell may be provided with a thermally insulating layer, as illustrated in Fig.5, which shows more detail of a part of a module 4. Each module comprises a plurality of energy storage devices 8, for example, a battery cell, along one side of which is part 9 of the cooler 22 and on the other side is a thermally insulating layer 10. The cooler shown provides cooling fluid 13 in the fluid channels to cool by heat exchange over the surface of the cell. The channels are typically thin walled channels or tubing, which may be formed in the carrier by additive manufacturing, moulding, or extrusion and which come into contact with a substantial part of the cell surface. Effective heat transfer from the cell to the cooling fluid is possible through the thin walled conduits.

In order to maintain compression of the cell by the carrier 20 to take account of expansion of the cell over time, there needs to be some flexibility to allow for the changes over time. This may be provided by the thermally insulating layer 10, or by a separate flexible layer 14 provided between one surface of the energy storage device and the cooler. The insulating layer or flexible sheet applies a low pressure, typically below 0.2bar, on the cell wall to increase performance and lifespan and accepts swelling due to normal operation and degradation during the complete life of the cell. The carriers 20 are mounted on one another and fixed together via fittings, such as bolts in fittings 24, 25. Between each water inlet section 3 and outlet section 7 on each carrier 20, a spacer, or washer 29, 28 may be provided.

Cooling fluid flows from the inlet pipe 3 through the channels, or conduits 23 of the cooler 22, cooling the cell by thermal transfer from the surface of the cell through the thin tubing 23 to the cooling fluid. The cooling fluid channels or tubing may have a typical overall thickness in the range of 5mm to 20mm, with a wall thickness in the range of 1mm to 5mm and preferably, no more than 3mm for a polymer plastics material. The cooling fluid is carried away into the outlet pipe 7 and returned to the cooling unit 1 to be cooled again. The tubing 23 formed under plate 21 covers a substantial part of the cell surface on the side that it contacts, anything from 30% to 75% of the cell surface area on that side of the cell.

The overall design has a significantly reduced total material weight and cost by using the cooling liquid pipes to flow cooling fluid directly adjacent to the cell surface, instead of conventional cooler block, heat exchanger designs. In addition, this cooling is provided for normal operation, to keep the cell within a temperature range that is beneficial to performance and operational lifetime, rather than as a one off, only in the case of a thermal event. The water channels 23 may be formed in any suitable form, connected between the inlet and outlet pipes 3, 7 via the tubes 5, 6. Preferably, the cross section of the channels is square to maximise the contact and minimise the amount of plastics material between the cooling fluid and the energy storage device. However, other cross sections could be used, such as circular cross section tubing.

The cell is cooled directly by flowing cooling fluid through the cooling fluid channels in contact with a substantial part of the cell surface, with very little thermal resistance. Conventional cooling arrangements have suffered from hot spots for areas of the cell which were far away from the cooler block, or heat exchanger, but this laminated cooler and cell module avoids this problem. This has the effect of slowing down the aging process of the cell, so increasing its lifetime.

The thin tubing may take any suitable form, connected between the inlet and outlet tubes 5, 6, for example, a continuous serpentine 11 connected between the inlet and outlet tubes 5, 6, as shown in Fig.3a, or parallel rows 12 of tubing fed by a common supply connected to the inlet tube 5 and exiting through outlet tube 6, as shown in Fig.3b. The tubing may be metal, but more typically is a synthetic material, such as polyethylene, or polyamide, for example PA66 plastics, or thermoplastics such as TCE2, TCE5, or other suitable materials which may be moulded, extruded, or formed by additive manufacturing to produce the required shape. The tubing material is able to withstand normal operating temperatures of the energy storage modules. An alternative is to form channels walls on a base, for example by moulding, then apply a plate to the upper surface of the walls, which is welded, or laminated, or otherwise fixed in place. The conduits for cooling fluid may have an overall thickness in the range of 5mm to 20mm, with a wall thickness in the range of 1mm to 5mm, preferably, no more than 3mm for a polymer plastics material.

The layer of thermal insulation 10 on the other side of the cell reduces heat transfer from a cell in the module to a neighbouring cell in the module of the energy storage unit 2 if the cooler is only in direct contact with the cell on one side. The cooling unit 1 provides a flow of cooling fluid around a circuit via pipes 3, 7 and inlet and outlet tubes 5, 6 of each energy storage module 4 then through the conduits 13 of coolers 9 of each energy storage device, or cell 8. Each module 4 is constructed by assembling a series of carriers incorporating the cooler, with a cell, insulation material, a thin flexible sheet to allow for cell expansion, if required, then repeating for multiple cells. The carriers of each cell connected in series provide the fluid supply pipes 3, 7 and are fixed together, for example by bolts running the length of the module through multiple carriers.

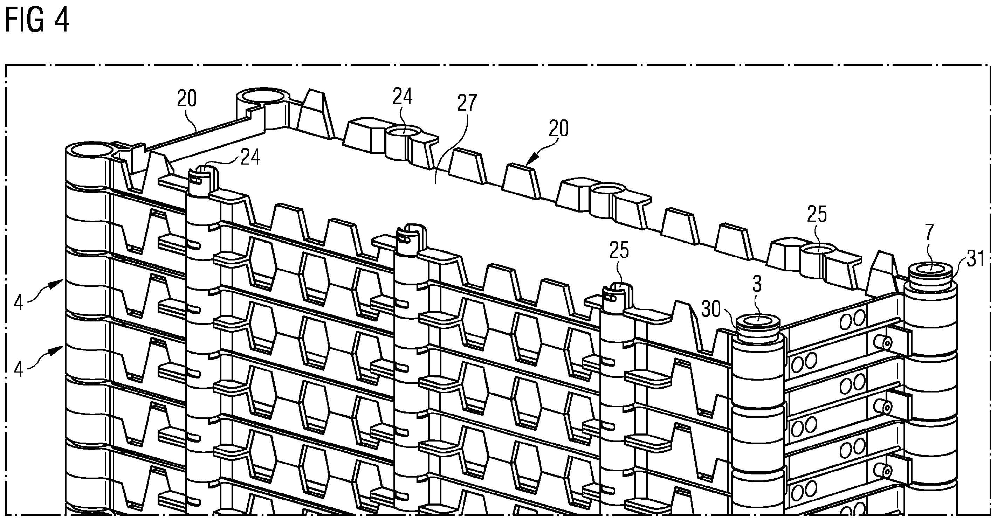

Fig.4 shows more detail of how the carriers 20 are combined to form a module. For each energy storage device of the module a carrier is provided, each carrier comprising an integral cooler 22, and the carriers are stacked together, as shown in Fig.4. Cooling fluid enters the tubes of each cooler 22 from an opening 70 in the common inlet pipe 3 that runs along the stack and exits through an opening 71 in the common outlet pipe 7 that runs along the stack. In a closed system, the cooling fluid is pressurised and circulates around the stack of modules via the common pipes 3, 7 and individual coolers 22 of each module 4.

By contrast with a conventional cooling system, the combination of water cooling to keep each cell at a preferred operating temperature with the use a light, compact, thermal insulation between individual cells of each module in the energy storage system to prevent propagation of heat from one cell to another results in an energy storage system which is more temperature stable and less prone to thermal runaway. The system may be operated without the need for any complex control system. The addition of the thermal insulation to inhibit transmission of heat between cells in the event of thermal runaway is achievable at a relatively low cost. The user is able to operate the energy storage system within an optimal temperature window, whilst reducing the possibility that, for an electrochemical cell, a thermal event in a module will develop into a thermal runaway.

Although the examples have been described with respect to electrochemical cells, such as batteries, which may suffer a thermal runaway and the need to prevent this propagating, other types of stored energy units, such as capacitors, supercapacitors, and fuel cells may suffer if the temperature of modules of the stored energy units regularly goes outside a preferred operating range, reducing the overall lifetime and increasing maintenance costs, so the cooling system may also be beneficial for these. For a vessel, or system, relying on stored energy as its primary, or only power source, reliability is particularly important and optimising operating conditions is desirable. The detailed examples given are for batteries, or electrochemical cells, but the principle of the invention is applicable to other types of energy storage unit. Finally, the invention is defined by the appended claims.

## Claims

1. An energy storage module cooling system, the system comprising a source of cooling fluid (1); and a fluid conduit (3) for supplying the cooling fluid to one or more energy storage modules (4); wherein each energy storage module comprises carriers (20) for a plurality of energy storage devices (8), the carriers being stacked together; the carriers further comprising cooling channels (23) forming an integral cooler (22) for each energy storage device wherein the cooling channels (23) are formed of one of polythene, polyamide, or thermoplastic; and wherein one surface of each energy storage device is in thermal contact with the cooler (22); and another surface of the energy storage device is provided with a thermally insulating layer (10) whereby heat transfer between adjacent energy storage devices is reduced; wherein each energy storage device (8) is fitted into the carrier (20), charaterized in that the cooler (22) comprises a serpentine shaped channel (23) coupled to the source of cooling fluid.

2. A system according to claim 1, wherein the cooler (22) comprises a plurality of channels (23) in parallel coupled to the source of cooling fluid (1).

3. A system according to any preceding claim, wherein the thickness of walls of the cooler channel (23) does not exceed 5mm.

4. A system according to any preceding claim, wherein the cooling fluid comprises one of water, or water glycol mixture.

5. A system according to any preceding claim, wherein the thermally insulating layer (10) comprises an inorganic silicate.

6. A system according to any preceding claim, wherein the thermally insulating layer (10) has a thickness in the range of 1mm to 5mm.

7. A system according to any preceding claim, wherein the cooling unit (1), cooling fluid conduit (3) and coolers (22) comprise a closed, re-circulating system.

8. A system according to any preceding claim, wherein the energy storage devices (8) comprise electrochemical cells.

9. A power supply system, the system comprising one or more energy storage modules (4), each module comprising a plurality of energy storage devices (8) electrically connected in series; and a cooling system according to any preceding claim.

10. A method of manufacturing a carrier or cooler (22) of an energy storage module cooling system according to any of claims 1 to 8, the method comprising forming the cooling channels (23) by 3-D printing, additive manufacturing, moulding, or extrusion.

## Patentansprüche

1. Kühlsystem für Energiespeichermodule, wobei das System eine Quelle von Kühlfluid (1); und eine Fluidleitung (3) zum Zuführen des Kühlfluids zu einem oder mehreren Energiespeichermodulen (4) umfasst; wobei jedes Energiespeichermodul Träger (20) für eine Vielzahl von Energiespeichervorrichtungen (8) umfasst, wobei die Träger zusammen gestapelt sind; wobei die Träger ferner Kühlkanäle (23) umfassen, die einen integrierten Kühler (22) für jede Energiespeichervorrichtung ausbilden, wobei die Kühlkanäle (23) aus einem von Polyethen, Polyamid oder Thermoplast ausgebildet sind; und wobei eine Oberfläche jeder Energiespeichervorrichtung in thermischem Kontakt mit dem Kühler (22) steht; und eine andere Oberfläche der Energiespeichervorrichtung mit einer thermischen Isolationsschicht (10) versehen ist, wodurch eine Wärmeübertragung zwischen benachbarten Energiespeichervorrichtungen reduziert wird; wobei jede Energiespeichervorrichtung (8) in den Träger (20) eingepasst ist, **dadurch gekennzeichnet, dass** der Kühler (22) einen serpentinenförmigen Kanal (23) umfasst, der mit der Quelle von Kühlfluid gekoppelt ist.

2. System nach Anspruch 1, wobei der Kühler (22) eine Vielzahl von Kanälen (23), die parallel mit der Quelle von Kühlfluid (1) gekoppelt ist, umfasst.

3. System nach einem der vorhergehenden Ansprüche, wobei die Dicke von Wänden des Kühlerkanals (23) 5 mm nicht überschreitet.

4. System nach einem der vorhergehenden Ansprüche, wobei das Kühlfluid eines von Wasser oder einem Wasser-Glykol-Gemisch umfasst.

5. System nach einem der vorhergehenden Ansprüche, wobei die thermische Isolationsschicht (10) ein anorganisches Silikat umfasst.

6. System nach einem der vorhergehenden Ansprüche, wobei die thermische Isolationsschicht (10) eine Dicke in dem Bereich von 1 mm bis 5 mm aufweist.

7. System nach einem der vorhergehenden Ansprüche, wobei die Kühleinheit (1), eine Kühlfluidleitung (3) und Kühler (22) ein geschlossenes Umlaufsystem umfassen.

8. System nach einem der vorhergehenden Ansprüche, wobei die Energiespeichervorrichtungen (8) elektrochemische Zellen umfassen.

9. Stromversorgungssystem, wobei das System ein oder mehrere Energiespeichermodule (4) umfasst, wobei jedes Modul eine Vielzahl von Energiespeichervorrichtungen (8), die elektrisch in Reihe geschaltet sind; und ein Kühlsystem nach einem der vorhergehenden Ansprüche umfasst.

10. Verfahren zum Herstellen eines Trägers oder Kühlers (22) eines Kühlsystems für Energiespeichermodule nach einem der Ansprüche 1 bis 8, wobei das Verfahren das Ausbilden der Kühlkanäle (23) durch 3D-Druck, additive Herstellung, Formung oder Extrusion umfasst.

## Revendications

1. Système de refroidissement de module de stockage d'énergie, le système comprenant une source de fluide de refroidissement (1) et un conduit de fluide (3) pour fournir le fluide de refroidissement à un ou plusieurs modules de stockage d'énergie (4) ; dans lequel chaque module de stockage d'énergie comprend des supports (20) pour une pluralité de dispositifs de stockage d'énergie (8), les supports étant empilés les uns sur les autres ; les supports comprenant en outre des canaux de refroidissement (23) formant un refroidisseur intégré (22) pour chaque dispositif de stockage d'énergie, les canaux de refroidissement (23) étant formés d'un matériau choisi parmi le polyéthylène, le polyamide ou un thermoplastique ; et dans lequel une première surface de chaque dispositif de stockage d'énergie est en contact thermique avec le refroidisseur (22), et une autre surface du dispositif de stockage d'énergie est pourvue d'une couche thermiquement isolante (10), moyennant quoi le transfert de chaleur entre des dispositifs de stockage d'énergie adjacents est réduit ; dans lequel chaque dispositif de stockage d'énergie (8) est logé dans le support (20), **caractérisé en ce que** le refroidisseur (22) comprend un canal en forme de serpentin (23) couplé à la source de fluide de refroidissement.

2. Système selon la revendication 1, dans lequel le refroidisseur (22) comprend une pluralité de canaux (23) en parallèle couplés à la source de fluide de refroidissement (1).

3. Système selon l'une quelconque des revendications précédentes, dans lequel l'épaisseur des parois du canal de refroidissement (23) ne dépasse pas 5 mm.

4. Système selon l'une quelconque des revendications précédentes, dans lequel le fluide de refroidissement comprend un fluide choisi parmi l'eau ou un mélange d'eau et de glycol.

5. Système selon l'une quelconque des revendications précédentes, dans lequel la couche thermiquement isolante (10) comprend un silicate inorganique.

6. Système selon l'une quelconque des revendications précédentes, dans lequel la couche thermiquement isolante (10) présente une épaisseur comprise entre 1 mm et 5 mm.

7. Système selon l'une quelconque des revendications précédentes, dans lequel l'unité de refroidissement (1), le conduit de fluide de refroidissement (3) et les refroidisseurs (22) constituent un système fermé à recirculation.

8. Système selon l'une quelconque des revendications précédentes, dans lequel les dispositifs de stockage d'énergie (8) comprennent des cellules électrochimiques.

9. Système d'alimentation électrique, le système comprenant un ou plusieurs modules de stockage d'énergie (4), chaque module comprenant une pluralité de dispositifs de stockage d'énergie (8) reliés électriquement en série ; et un système de refroidissement selon l'une quelconque des revendications précédentes.

10. Procédé de fabrication d'un support ou d'un refroidisseur (22) d'un système de refroidissement de module de stockage d'énergie selon l'une quelconque des revendications 1 à 8, le procédé comprenant la formation des canaux de refroidissement (23) par impression 3D, fabrication additive, moulage ou extrusion.
